# EUROPEAN PATENT SPECIFICATION

(11) **EP 1 353 958 B1**
(45) Date of publication and mention of the grant of the patent: **24.01.2007**
(21) Application number: 01990060.4
(22) Date of filing: 12.12.2001
(51) Int. Cl.: C08F 2/00

(54) **A PROCESS FOR MAKING HIGH PURITY TRANSLUCENT PERFLUOROELASTOMER ARTICLES**
VERFAHREN ZUR HERSTELLUNG VON HOCHREINEN DURCHSCHEINENDEN PERFLUORELASTOMER-GEGENSTÄNDEN
PROCEDE PERMETTANT DE FABRIQUER DES ARTICLES PERFLUOROELASTOMERES TRANSLUCIDES D'UNE GRANDE PURETE

(30) Priority: 14.12.2000 US 255540 P
(43) Date of publication of application: 22.10.2003
(73) Proprietor: DUPONT DOW ELASTOMERS L.L.C., Wilmington, DE 19809 (US)
(72) Inventor: COUGHLIN, Michael, Cregg, Wilmington, DE 19810 (US); WANG, Suhong, Hockessin, DE 19707 (US)
(74) Representative: Morf, Jan Stefan
(86) International application number: PCT/US2001/047547
(87) International publication number: WO 2002/048200

(56) References cited:
- EP-A- 0 282 979
- EP-A- 0 842 980
- WO-A-00/09569
- WO-A-95/28442
- WO-A-98/23653
- US-A- 2 469 827
- US-A- 3 752 789
- US-A- 4 983 680
- US-A- 5 677 389

## Description

### FIELD OF THE INVENTION

This invention relates to a process for making translucent or transparent perfluoroelastomer articles which contain very low levels of metals.

### BACKGROUND OF THE INVENTION

Perfluoroelastomers have achieved outstanding commercial success and are used in a wide variety of applications in which severe environments are encountered, in particular those end uses where exposure to high temperatures and aggressive chemicals occurs. For example, these polymers are often used in seals for aircraft engines, in semiconductor manufacturing equipment, in oil-well drilling devices, and in sealing elements for industrial equipment used at high temperatures.

The outstanding properties of perfluoroelastomers are largely attributable to the stability and inertness of the copolymerized perfluorinated monomer units that make up the major portion of the polymer backbones in these compositions. Such monomers include tetrafluoroethylene and perfluoro(alkyl vinyl) ethers. In order to develop elastomeric properties fully, perfluoroelastomers are typically crosslinked, i.e. vulcanized. To this end, a small percentage of cure site monomer is copolymerized with the perfluorinated monomer units. Cure site monomers containing at least one nitrile group, for example perfluoro-8-cyano-5-methyl-3,6-dioxa-1-octene, are especially preferred. Such compositions are described in U.S. Patents 4,281,092; 4,394,489; 5,789,489; and 5,789,509.

Perfluoroelastomer articles such as seals, O-rings, and valve packings are typically opaque materials which are highly filled with carbon black or metallic fillers. When exposed to plasmas in end uses such as semiconductor manufacturing, the polymeric component of these articles is etched away, leaving the fillers as undesirable particle contaminants. Furthermore, any metals, metal oxides or metal salts originally contained in the articles are released as polymer is decomposed, thus providing a second source of contamination.

It would be desirable to have perfluoroelastomer articles which are designed to be particularly suitable for use in these harsh (i.e. plasma) environments. Such seals must also have good tensile properties and low compression set resistance.

Saito, et al., in U.S. Patent 5,565,512, disclose the use of ammonium salts of organic or inorganic acids as curing agents for perfluoroelastomers. Saito's perfluoroelastomer compounds are not filled. They receive a secondary vulcanization in air. The resulting articles are transparent and vary in color from amber to yellow to colorless. However, the articles have higher compression set than may be required in some end use applications.

It would be beneficial to have perfluoroelastomer articles which are translucent or transparent and lightly colored or colorless, and which contain a very low amount of metals, while maintaining good tensile properties and low compression set.

### SUMMARY OF THE INVENTION

The present invention is directed to a cured perfluoroelastomer article which is translucent or transparent and either lightly colored or colorless. The articles contain less than 200 ppm metals and have good tensile properties and compression set. More specifically, the present invention is directed to a process for making a cured translucent or transparent perfluoroelastomer article, said process comprising:
A. mixing a perfluoroelastomer copolymer containing less than 200 ppm metals with 2,2-bis[3-amino-4-hydroxyphenyl]hexafluoropropane curing agent to form a curable composition consisting essentially of perfluoroelastomer and curative, said perfluoroelastomer comprising copolymerized units of (1) tetrafluoroethylene, (2) a perfluorovinyl ether selected from the group consisting of perfluoro(alkyl vinyl) ethers, perfluoro(alkoxy vinyl) ethers, and mixtures thereof, and (3) a cure site monomer selected from the group consisting of nitrile-containing fluorinated olefins and nitrile-containing fluorinated vinyl ethers;
B. shaping said curable composition to form a perfluoroelastomer article;
C. heating said perfluoroelastomer article to a temperature between 150° to 240°C for a period of 5 to 30 minutes sufficient to at least partially cure said perfluoroelastomer article; and
D. heating said at least partially cured perfluoroelastomer article in air at a temperature between 150°C and 350°C in order to render the article translucent or transparent and to lighten its color.

### DETAILED DESCRIPTION OF THE INVENTION

Perfluoroelastomers employed in the present invention are based on elastomeric perfluoropolymers. The perfluoroelastomers contain nitrile groups that render the polymers crosslinkable.

Perfluoroelastomers are polymeric compositions having copolymerized units of at least two principal perfluorinated monomers. Generally, one of the principal comonomers is a perfluoroolefin, while the other is a perfluorovinyl ether. Representative perfluorinated olefins include tetrafluoroethylene and hexafluoropropylene. Suitable perfluorinated vinyl ethers are those of the formula

CF₂=CFO(R_{f'}O)ₙ(R_{f"}O)ₘR_{f} (I)

where R_{f'} and R_{f"}, are different linear or branched perfluoroalkylene groups of 2-6 carbon atoms, m and n are independently 0-10, and R_{f} is a perfluoroalkyl group of 1-6 carbon atoms.

A preferred class of perfluorovinyl ethers includes compositions of the formula

CF₂=CFO(CF₂CFXO)ₙR_{f} (II)

where X is F or CF₃, n is 0-5, and R_{f} is a perfluoroalkyl group of 1-6 carbon atoms.
A most preferred class of perfluorovinyl ethers includes those ethers wherein n is 0 or 1 and R_{f} contains 1-3 carbon atoms. Examples of such perfluorinated ethers include perfluoro(methyl vinyl) ether and perfluoro(propyl vinyl) ether. Other useful monomers include compounds of the formula

CF₂=CFO[(CF₂)ₘCF₂CFZO]ₙR_{f} (III)

where R_{f} is a perfluoroalkyl group having 1-6 carbon atoms,
m = 0 or 1, n = 0-5, and Z = F or CF₃.
Preferred members of this class are those in which R_{f} is C₃F₇, m = 0, and n=1.

Additional perfluorovinyl ether monomers include compounds of the formula

CF₂=CFO[(CF₂CFCF₃O)ₙ(CF₂CF₂CF₂O)ₘ(CF₂)ₚ]CₓF₂ₓ₊₁ (IV)

where m and n independently = 1-10, p = 0-3, and x = 1-5.
Preferred members of this class include compounds where n = 0-1, m = 0-1,andx=1.

Another example of a useful perfluorovinyl ether includes

CF₂=CFOCF₂CF(CF₃)O(CF₂O)ₘCₙF₂ₙ₊₁ (V)

where n = 1-5, m = 1-3, and where, preferably, n = 1.

Mixtures of perfluorovinyl ethers may also be used.

Preferred perfluoroelastomers are composed of tetrafluoroethylene and at least one perfluorovinyl ether as principal monomer units. In such copolymers, the copolymerized perfluorinated ether units constitute from about 15 mole percent to 65 mole percent (preferably 25 to 60 mole percent) of total monomer units in the polymer.

The perfluoropolymer further contains copolymerized units of at least one nitrile group-containing cure site monomer, generally in amounts of from 0.1-5 mole percent. The range is preferably between 0.3-1.5 mole percent. Suitable cure site monomers include nitrile-containing fluorinated olefins and nitrile-containing fluorinated vinyl ethers. Useful nitrile-containing cure site monomers include those of the formulas shown below.

CF₂=CF-O(CF₂)ₙ-CN (Vl)

where n = 2-12, preferably 2-6;

CF₂=CF-O[CF₂-CFCF₃-O]ₙ-CF₂-CF(CF₃)-CN (VII)

where n= 0-4, preferably 0-2;

CF₂=CF-[OCF₂CF(CF₃)]ₓ-O-(CF₂)ₙ-CN (VIII)

where x = 1-2, and n = 1-4; and

CF₂=CF-O-(CF₂)ₙ-O-CF(CF₃)CN (lX)

where n = 2-4.
Those of formula (VIII) are preferred. Especially preferred cure site monomers are perfluorinated polyethers having a nitrile group and a trifluorovinyl ether group. A most preferred cure site monomer is

CF₂=CFOCF₂CF(CF₃)OCF₂CF₂CN (X)

i.e. perfluoro(8-cyano-5-methyl-3,6-dioxa-1-octene) or 8-CNVE.

The perfluoroelastomers employed in this invention preferably comprise copolymerized units of i) 38.5 to 74.7 (most preferably 44 to 69.5) mole percent tetrafluoroethylene (TFE), ii) 25 to 60 (most preferably 30 to 55) mole percent perfluoro(methyl vinyl) ether and iii) 0.3 to 1.5 (most preferably 0.5 to 1.0) mole percent of a nitrile group - containing cure monomer.

Perfluoroelastomers employed in this invention may be manufactured by such well-known processes as those described in Breazeale (U.S. Patent No. 4,281,092) or Coughlin et. al. (U.S. Patent No. 5,789,489). In order for the perfluoroelastomer articles produced by this invention to contain less that 200 ppm metals, special care must be taken in order to remove sufficient impurities from the perfluoroelastomer prior to mixing it with curative. Potential impurities in the perfluoroelastomer are those resulting from the emulsion or suspension polymerization and isolation of the perfluoroelastomer copolymer. Such impurities may include various metal ions associated with pH buffers, surfactants, polymerization initiators, suspension agents, defoaming agents and coagulating agents. Isolation of the perfluoroelastomer polymer from the emulsion may be improved by employing large volumes of deionized water per unit volume of emulsion when the polymer is coagulated and washed. Preferably at least 2 volumes of de-ionized water is used per volume of emulsion, most preferably at least 4 volumes of deionized water per volume of emulsion. During isolation, the polymer emulsion is first diluted with deionized water. Coagulating agent is then added to this diluted solution. Although a variety of coagulating agents may be used during isolation (such as aluminum and calcium salts, as well as mineral acids), magnesium salts are preferred, especially magnesium sulfate. Coagulated polymer is separated from solution by means such as filtration or centrifugation. Preferably, coagulation and washing is done at a temperature between 35°C to 65°C. The resulting perfluoroelastomer contains less than 200 ppm metals, as determined by a graphite furnace Inductively Coupled Plasma (ICP) analysis of the polymer.

Early in the process of this invention, a curable compound consisting essentially of perfluoroelastomer and a particular type of curing agent is manufactured by mixing the perfluoroelastomer with the curative. The curing agent is 2,2-bis[3-amino-4-hydroxyphenyl]hexafluoropropane. Any type of mixing device such as a two roll rubber mill or an internal mixer (e.g. a Banbury® internal mixer or an extruder) may be employed to make the compound. By "consisting essentially of is meant that the compound contains substantially no fillers (i.e. less than 3 parts filler per 100 parts by weight perfluoroelastomer). By "filler" is meant common rubber additives such as carbon black, PTFE micropowders, clays and metallic fillers such as titanium dioxide, barium sulfate, and silica.

The curing agent will be referred to as diaminobisphenol AF (DABPAF). Articles prepared by the process of this invention that are cured with DABPAF generally have better compression set (i.e. lower values) than similar articles made with a different curative. The curing agents can be prepared as disclosed in U.S. Patent Number 3,332,907 to Angelo. Diaminobisphenol AF can be prepared by nitration of 4,4'-[2,2,2-trifluoro-1-(trifluoromethyl)ethylidene]bisphenol (i.e. bisphenol AF), preferably with potassium nitrate and trifluoroacetic acid, followed by catalytic hydrogenation, preferably with ethanol as a solvent and a catalytic amount of palladium on carbon as catalyst.

In the process of this invention, the perfluoroelastomer composition prepared above is shaped into a desired article and then at least partially cured. Shaping may be performed by any conventional means such as compression molding and extrusion. Partial curing is affected by exposing the uncured article to a temperature sufficient to initiate the vulcanization reaction. Typically, an uncured article is exposed to a temperature between 150° to 240°C for a period of 5 to 30 minutes in order to at least partially cure it. The resulting article is typically deeply colored and may be opaque.

The shaped and at least partially cured fluoroelastomer article is then heated in air to a temperature between 150° and 350°C. While at this elevated temperature, additional vulcanization may occur. Also, the color of the article lightens considerably (i.e. a dark red or black article will become light amber, light yellow, or even colorless) and the article becomes either translucent or transparent to visible light. The article may be held at this elevated temperature for any period of time, usually for a period between 1 to 70 hours (preferably 10 to 50 hours). Typically the amount of time the article is held at elevated temperature is determined by the desired final color of the seal. Generally, the longer the exposure to elevated temperatures in air, the lighter the color of the resulting article. The amount and type of curative employed affects the time it is necessary to expose the article to high temperatures in order to achieve the desired color.

Translucent or transparent perfluoroelastomer articles made by the process of this invention have a total metal level of no more 200 ppm as measured by inductively coupled plasma (lCP). The cured articles of this invention also release less residue than do prior art perfluoroelastomer cured articles after being exposed to high temperatures or plasmas. Tensile properties and compression set resistance are comparable to those of similar filled articles, e.g. tensile strengths of 6.9 to 10.3 MPa (1000-1500 psi), elongation at break of 250-300%, M₁₀₀ of 1.7 to 2.1 MPa (250-300 psi), hardness (Shore A) of 63-72, and compression set (204°C for 70 hours) of 10-35% (preferably 10-15%), as determined by the Test Methods below.

The invention is now illustrated by certain embodiments wherein all parts are by weight unless otherwise specified.

### EXAMPLES

### TEST METHODS

### Tensile Properties

Physical property measurements were obtained according to methods described in ASTM D1414 (for O-rings) and ASTM D412 (for dumbbells). The following parameters were recorded:
M₁₀₀, stress at 100% elongation in units of MPa
T_{B}, tensile strength at break in units of MPa
E_{B}, elongation at break in units of %

Compression set of O-ring samples was determined in accordance with ASTM 395-89/D1414, 204°C for 70 hours.

The following polymers were used in the Examples:
Polymer A - A terpolymer comprising copolymerized units of tetrafluoroethylene (TFE), perfluoro(methyl vinyl)ether (PMVE) and 8-CNVE was prepared in the following manner. Three separate aqueous solutions were fed simultaneously to a 5.575 liter mechanically stirred, water-jacketed, stainless steel autoclave, each at a rate of 688 ml/hour. Solution A contained 25.3 g ammonium persulfate, 624.5 g disodium hydrogen phosphate, and 600 g of ammonium perfluorooctanoate (Fluorad® FC-143 perfluorinated surfactant) dissolved in 20 liters of deionized water. Solution B contained 600 g of ammonium perfluorooctanoate dissolved in 20 liters of de-ionized water and Solution C contained 25.3 g ammonium persulfate, and 600 g ammonium perfluorooctanoate dissolved in 20 liter de-ionized water. At the same time, the liquid monomer perfluoro-(8-cyano-5-methyl-3,6-dioxa-1-octene) (8-CNVE) was fed at the rate of 18.5 g/hour. By means of a diaphragm compressor, a gaseous mixture of tetrafluoroethylene (TFE) (360.1 g/hour) and perfluoro(methyl vinyl) ether (PMVE) (311.3 g/hour) was fed to the reactor at a constant rate. The temperature of the reaction was maintained at 85 °C, and the pressure at 4.1 MPa (600 psi). The polymer emulsion was removed continuously by means of a let-down valve, and the unreacted monomers were vented. A water-based silicone defoamer, type D65 available from Dow Coming Corporation, Midland, Michigan, was added continuously at the minimum rate necessary to prevent foaming of the emulsion while the gases were vented.
   The emulsion from 45 hr of operation was collected and the polymer was isolated by first diluting the emulsion with 8 volumes of deionized water per volume of emulsion at a temperature of 60 °C. A solution of 75 g magnesium sulfate heptahydrate per liter of de-ionized water was then added to the diluted emulsion at the rate of 0.3 volume of the magnesium sulfate solution per volume of emulsion. After stirring for one hour at 60°C, the coagulated polymer was filtered, and returned to a volume of de-ionized water equal to the original dilution volume, and then stirred for 30 min at 45 °C. The polymer was again filtered and dried in an air oven for 48 hours at 70 °C. Polymer yield was 23.6 kg (51.9 lb). The composition of the polymer, as determined by FTIR, was 66.7 mole percent TFE, 32.6 mole percent PMVE, and 0.7 mole percent 8-CNVE.
Polymer B- A terpolymer containing 61.7 mole percent copolymerized units of TFE, 37.5 mole percent units of perfluoro(methyl vinyl) ether (PMVE) and 0.8 mole percent units of 8-CNVE was prepared by substantially the same procedure as was used to prepare Polymer A, with a few exceptions. The aqueous feed solutions consisted of: Solution A - 26.1 g ammonium persulfate, 686.8 g disodium hydrogen phosphate, and 600 g of ammonium perfluorooctanoate (Fluorad® FC-143 perfluorinated surfactant) dissolved in 20 liters of de-ionized water; Solution B - identical to that used for Polymer A; and Solution C - 26.1 g ammonium persulfate, and 600 g ammonium perfluorooctanoate dissolved in 20 liter de-ionized water. The 8-CNVE feed rate was 19.1 g/hr. The TFE and PMVE feed rates were 320.9 g/hour and 377.4 g/hour, respectively. The polymer was isolated by first diluting the emulsion with 5 volumes of deionized water per volume of emulsion at a temperature of 40 °C. A solution of 75 g magnesium sulfate heptahydrate per liter of de-ionized water was added to the diluted emulsion at the rate of 0.3 volume of the magnesium sulfate solution per volume of emulsion. After stirring for 30 min at 40°C, the coagulated polymer was filtered, and returned to a volume of de-ionized water equal to the original dilution volume, and then stirred for 30 min at 40°C. The polymer was again filtered and dried in an air oven for 48 hour at 70°C. The emulsion from 48 hr of collection yielded 37.4 kg (82.3 lb).

In the following Examples, the color and physical properties of various articles, made by the process this invention, were measured.

### Example 1

Perfluoroelastomer Polymer A was compounded on a two roll rubber mill with the ingredient(s) and proportions shown in Table I. The resulting compound was molded into AS-568A K214 O-rings and press cured at 193°C for 15 minutes. The O-rings were deeply colored at this point in the process. The O-rings were then heated in air at a temperature of 288°C for 24 hours. Physical properties of the resulting O-rings were measured according to the Test Methods and the results are also reported in Table I.

### Example 2 (Comparative)

Perfluoroelastomer Polymer A was compounded on a two roll rubber mill with the ingredient(s) and proportions shown in Table I. The resulting compound was molded into AS-568A K214 O-rings and press cured at 232°C for 30 minutes. The O-rings were then heated in air at a temperature of 316°C for 40 hours. Physical properties of the resulting O-rings were measured according to the Test Methods and the results are also reported in Table I.

### Example 3 (Comparative)

Perfluoroelastomer Polymer B was compounded on a two roll rubber mill with the ingredient(s) and proportions shown in Table I. A quantity of the resulting compound was molded into dumbbells and press cured at 199°C for 10 minutes. The dumbbells were then heated in air at a temperature of 232°C for 24 hours. Tensile properties of the resulting dumbbells were measured according to the Test Methods and the results are also reported in Table I. Another quantity of the above compound was molded into AS-568A K214 O-rings and press cured at 199°C for 30 minutes. The O-rings were then heated in air at a temperature of 232°C for 24 hours. Compression set of the O-rings was determined according to the Test Method and the result is included in Table I.

**TABLE I**

| **Formulation, phr** | **Example 1** | **Example 2** | **Example 3** |
|---|---|---|---|
| Polymer A | 100 | 100 | 0 |
| Polymer B | 0 | 0 | 100 |
| DABPAF¹ | 0.75 | 0 | 0 |
| TBC² | 0 | 0.5 | 0 |
| Lupersol 101³ | 0 | 0 | 1 |
| Diak #8⁴ | 0 | 0 | 1 |

| Physical Properties | | | |
|---|---|---|---|
| Tensile, MPa | 6.7 | 7.1 | 8.7 |
| M₁₀₀, MPa | 1.7 | 1.4 | 1.4 |
| Elongation, % | 252 | 399 | 255 |
| Compression set, % | 12 | 31 | 31 |
| Appearance | amber/translucent | colorless/transparent | amber/translucent |

| | | | |
|---|---|---|---|
| ¹Diaminobisphenol AF ²T-butyl carbamate ³organic peroxide (available from Atofina) ⁴tri(methallyl) isocyanurate (available from DuPont Dow Elastomers L.L.C.) | | | |

## Claims

1. A process for making a cured translucent or transparent perfluoroelastomer article having a metals content of less than 200 ppm, said process comprising:
A. mixing a perfluoroelastomer copolymer containing less than 200 ppm metals with 2,2-bis[3-amino-4-hydroxyphenyl]hexafluoropropane curing agent to form a curable composition consisting essentially of perfluoroelastomer and curative, said perfluoroelastomer comprising copolymerized units of (1) tetrafluoroethylene, (2) a perfluorovinyl ether selected from the group consisting of perfluoro(alkyl vinyl) ethers, perfluoro(alkoxy vinyl) ethers, and mixtures thereof, and (3) a cure site monomer selected from the group consisting of nitrile-containing fluorinated olefins and nitrile-containing fluorinated vinyl ethers;
B. shaping said curable composition to form a perfluoroelastomer article;
C. heating said perfluoroelastomer article to a temperature between 150° to 240°C for a period of 5 to 30 minutes sufficient to at least partially cure said perfluoroelastomer article; and
D. heating said at least partially cured perfluoroelastomer article in air at a temperature between 150°C and 350°C in order to render the article translucent or transparent and to lighten its color.

2. A process of claim 1 wherein said perfluoroelastomer employed in step A) is isolated by a process comprising:
i) diluting a volume of perfluoroelastomer polymer emulsion with a first amount of deionized water, said first amount equivalent to at least two volumes of emulsion, to form a dilute polymer solution;
ii) coagulating said polymer by addition of a coagulating agent to said dilute polymer solution;
iii) separating coagulated polymer from solution; and
iv) washing said coagulated polymer with a second amount of deionized water.

3. A process of claim 2 wherein said emulsion is diluted with at least 4 volumes of deionized water per volume of emulsion.

4. A process of claim 2 wherein said coagulating agent is magnesium sulfate.

5. A process of claim 2 wherein said coagulating and washing steps occur at a temperature between 35° to 65°C.

6. A process of claim 2 wherein said separating coagulated polymer from solution step is by a means selected from the group consisting of filtration and centrifugation.

7. A process of claim 2 wherein said second amount of deionized water is at least as large as said first amount for deionized water.

## Patentansprüche

1. Verfahren zur Herstellung eines ausgehärteten, durchscheinenden oder durchsichtigen Perfluorelastomergegenstands, der einen Gehalt an Metallen von weniger als 200 ppm aufweist, wobei das Verfahren Folgendes umfasst:
A. das Mischen eines Perfluorelastomer-Copolymers enthaltend weniger als 200 ppm Metalle mit 2,2-Bis[3-amino-4-hydroxyphenyl]hexafluorpropan-Aushärtungsmittel unter Bildung einer aushärtbaren Zusammensetzung bestehend im Wesentlichen aus Perfluorelastomer und Aushärtungsmittel, wobei das Perfluorelastomer copolymerisierte Einheiten von (1) Tetrafluorethylen, (2) einem Perfluorvinylether ausgewählt aus der Gruppe bestehend aus Perfluor(alkylvinyl)ethern, Perfluor(alkoxyvinyl)ethern und Mischungen derselben und (3) einem Aushärtungsortmonomer ausgewählt aus der Gruppe bestehend aus nitrilhaltigen fluorierten Olefinen und nitrilhaltigen fluorierten Vinylethem umfasst;
B. das Gestalten der aushärtbaren Zusammensetzung unter Bildung eines Perfluorelastomerartikels;
C. ausreichendes Erhitzen des Perfluorelastomerartikels auf eine Temperatur zwischen 150 ° und 240 °C für eine Zeitspanne von 5 bis 30 Minuten, um den Perfluorelastomerartikel zumindest teilweise auszuhärten; und
D. das Erhitzen des zumindest teilweise ausgehärteten Perfluorelastomerartikels an der Luft bei einer Temperatur zwischen 150 °C und 350 °C, um den Artikel durchscheinend oder durchsichtig zu machen und seine Farbe aufzuhellen.

2. Verfahren nach Anspruch 1, wobei das in Schritt A) verwendete Perfluorelastomer durch ein Verfahren isoliert wird umfassend:
i) das Verdünnen eines Volumens von Perfluorelastomer-Polymeremulsion mit einer ersten Menge von entionisiertem Wasser, wobei die erste Menge mindestens zwei Volumen Emulsion äquivalent ist, unter Bildung einer verdünnten Polymerlösung;
ii) das Koagulieren des Polymers durch Zugeben eines Koagulationsmittels zu der verdünnten Polymerlösung;
iii) das Trennen des koagulierten Polymers von der Lösung; und
iv) das Waschen des koagulierten Polymers mit einer zweiten Menge von entionisiertem Wasser.

3. Verfahren nach Anspruch 2, wobei die Emulsion mit mindestens 4 Volumen entionisiertem Wasser pro Volumen Emulsion verdünnt wird.

4. Verfahren nach Anspruch 2, wobei das Koagulationsmittel Magnesiumsulfat ist.

5. Verfahren nach Anspruch 2, wobei die Koagulations- und Waschschritte bei einer Temperatur zwischen 35 ° und 65 °C stattfinden.

6. Verfahren nach Anspruch 2, wobei der Schritt des Trennens des koagulierten Polymers von der Lösung durch ein Mittel erfolgt ausgewählt aus der Gruppe bestehend aus Filtrieren und Zentrifugieren.

7. Verfahren nach Anspruch 2, wobei die zweite Menge von entionisiertem Wasser mindestens so groß ist wie die erste Menge von entionisiertem Wasser.

## Revendications

1. Procédé pour la fabrication d'un article de perfluoroélastomère translucide ou transparent durci possédant une teneur en métaux de moins de 200 ppm, ledit procédé comprenant:
A. le mélange d'un copolymère de perfluoroélastomère contenant moins de 200 ppm de métaux avec l'agent de durcissement 2,2-bis[3-amino-4-hydroxyphényl]hexafluoropropane pour former une composition durcissable constituée essentiellement du perfluoroélastomère et de l'agent de durcissement, ledit perfluoroélastomère comprenant des unités copolymérisées (1) de tétrafluoroéthylène, (2) de perfluorovinyléther choisi dans le groupe constitué de perfluoro(alkylvinyl)éthers, de perfluoro(alkoxyvinyl)éthers et de mélanges de ceux-ci, et (3) de monomère site de durcissement choisi dans le groupe constitué d'oléfines fluorées contenant un nitrile et de vinyléthers fluorés contenant un nitrile;
B. le façonnage de ladite composition durcissable pour former un article de perfluoroélastomère;
C. le chauffage dudit article de perfluoroélastomère à une température entre 150° et 240°C pendant une période de 5 à 30 minutes, suffisante pour durcir au moins partiellement ledit article de perfluoroélastomère; et
D. le chauffage dudit article de perfluoroélastomère au moins partiellement durci dans l'air à une température entre 150°C et 350°C dans le but de rendre l'article translucide ou transparent et d'éclaircir sa couleur.

2. Procédé suivant la revendication 1, dans lequel ledit perfluoroélastomère employé dans l'étape A) est isolé par un procédé comprenant:
i) la dilution d'un volume d'émulsion de polymère de perfluoroélastomère avec une première quantité d'eau déminéralisée, ladite première quantité étant équivalente à au moins deux volumes d'émulsion, pour former une solution de polymère diluée;
ii) la coagulation dudit polymère par l'ajout d'un agent de coagulation à ladite solution de polymère diluée;
iii) la séparation du polymère coagulé à partir de la solution; et
iv) le lavage dudit polymère coagulé avec une deuxième quantité d'eau déminéralisée.

3. Procédé suivant la revendication 2, dans lequel ladite émulsion est diluée avec au moins 4 volumes d'eau déminéralisée par volume d'émulsion.

4. Procédé suivant la revendication 2, dans lequel ledit agent de coagulation est le sulfate de magnésium.

5. Procédé suivant la revendication 2, dans lequel lesdites étapes de coagulation et de lavage se produisent à une température entre 35° et 65°C.

6. Procédé suivant la revendication 2, dans lequel ladite étape de séparation du polymère coagulé de la solution s'effectue par un moyen choisi dans le groupe constitué d'une filtration et d'une centrifugation.

7. Procédé suivant la revendication 2, dans lequel ladite deuxième quantité d'eau déminéralisée est au moins aussi élevée que ladite première quantité d'eau déminéralisée.
